Europäisches Patentamt

European Patent Office

Office européen des brevets

(19)

(11) Numéro de publication: **0 140 807**
A1

(12) **DEMANDE DE BREVET EUROPEEN**

(21) Numéro de dépôt: **84440034.1**

(22) Date de dépôt: **02.08.84**

(51) Int. Cl.⁴: **F 16 K 11/00**, F 16 K 27/02, E 03 C 1/23

(30) Priorité: **17.08.83 FR 8313518**

(43) Date de publication de la demande: **08.05.85**
**Bulletin 85/19**

(84) Etats contractants désignés: **AT BE CH DE GB IT LI LU NL SE**

(71) Demandeur: **Jordan, Antoine, 26a, rue de Hésingue, F-68220 Buschwiller (FR)**

(72) Inventeur: **Jordan, Antoine, 26a, rue de Hésingue, F-68220 Buschwiller (FR)**

(74) Mandataire: **Aubertin, François, Cabinet Lepage & Aubertin Innovations et Prestations 4, rue de Haguenau, F-67000 Strasbourg (FR)**

(54) Robinet mélangeur monobloc.

(57) Un robinet mélangeur monobloc (1) d'un évier et/ou d'un lavabo, composé d'un corps (2) présentant une queue filetée (5) pour sa fixation, d'une arrivée d'eau froide (10) et d'une arrivée d'eau chaude (9), de deux têtes (11) et (12) pour ces arrivées d'eau (9, 10) et d'un bec verseur (3) de préférence orientable dont l'arrivée d'eau froide (10) comporte un piquage (13) raccordé à la machine à alimenter en eau froide et pourvu d'un robinet d'arrêt à bille (14) actionné à distance par des moyens de commande (19) intercalés entre le corps (2) du robinet mélangeur monobloc (1) et le robinet d'arrêt (14).

Robinet mélangeur monobloc.

L'invention concerne un robinet mélangeur monobloc d'un évier et/ou d'un lavabo composé d'un corps présentant une queue filetée pour sa fixation, d'une arrivée d'eau froide et d'une arrivée d'eau chaude, de deux têtes pour ces arrivées d'eau et d'un bec verseur de préférence orientable.

Actuellement, de nombreux ménages disposent d'une machine à laver le linge et/ou d'une machine à laver la vaisselle. Ces machines sont fréquemment placées à proximité immédiate soit de l'évier de la cuisine, soit du lavabo de la salle de bain du fait qu'elles nécessitent une évacuation des eaux usées et une arrivée d'eau froide. Cette dernière est munie d'un robinet d'arrêt que l'on dispose sur la conduite d'alimentation d'eau froide. Cependant, ce robinet d'arrêt est souvent d'accessibilité difficile, ce qui indispose l'usager. En règle générale, l'évier ou le lavabo comporte un robinet mélangeur monobloc constitué d'un corps, d'un bec verseur et de deux têtes permettant l'ouverture et/ou la fermeture des arrivées d'eau.

Pour pallier à l'inconvénient cité ci-dessus, on a conçu un robinet mélangeur monobloc comportant en plus des deux têtes au moins une troisième tête assurant l'ouverture et/ou la fermeture de l'arrivée d'eau froide de la machine à laver le lingeou de la machine à laver la vaisselle.

Cependant, ce robinet est relativement volumineux et onéreux. En effet, le corps de ce robinet doit contenir les arrivées d'eau chaude et d'eau froide ainsi que le départ de l'eau froide pour la machine en question. De plus, il est nécessaire de prévoir la place pour la troisième tête qui, placée à l'avant du corps, fait saillie par rapport à ce dernier. Fréquemment, l'usager se cogne à cette partie saillante.

La présente invention a pour but de remédier à ces inconvénients. L'invention, telle qu'elle est caractérisée dans les revendications, résout le problème consistant à créer un robinet mélangeur monobloc d'un évier et/ou d'un lavabo composé d'un corps présentant une queue filetée pour sa fixation, d'une arrivée d'eau froide et d'une arrivée d'eau chaude, de deux têtes pour ces arrivées d'eau et d'un bec verseur orientable, robinet mélangeur monobloc avec lequel on peut ouvrir et/ou fermer à distance l'arrivée d'eau froide alimentant soit la machine à laver le linge, soit la machine à laver la vaisselle.

Les avantages obtenus grâce à cette invention consistent essentiellement en ceci que l'on supprime toute manoeuvre du robinet d'arrêt de la machine à laver le linge ou de la machine à laver la vaisselle du fait que l'arrivée d'eau froide du robinet mélangeur monobloc comporte un piquage pourvu d'un robinet d'arrêt à bille et que le robinet d'arrêt de la machine devient inutile. Par ailleurs, le robinet mélangeur monobloc selon l'invention présente des moyens de commande à distance du robinet d'arrêt à bille situés derrière le bec verseur, ce qui permet de supprimer toute partie saillante vers l'avant risquant de blesser l'usager.

L'invention est exposée ci-après plus en détail à l'aide de dessins représentant seulement un mode d'exécution.

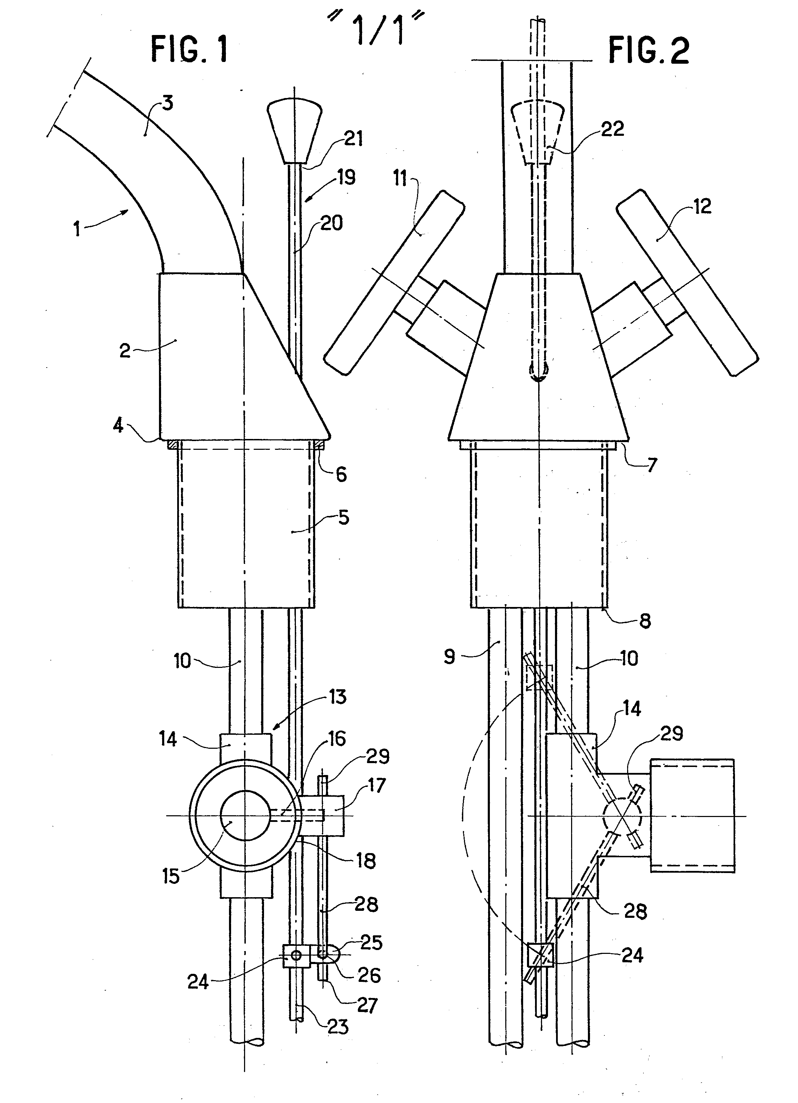

La figure 1 représente, en vue en élévation, un robinet mélangeur monobloc conforme à l'invention.

La figure 2 représente une vue depuis l'arrière de ce robinet.

On se réfère aux deux figures.

Le robinet mélangeur monobloc 1 comporte un corps 2 sur lequel est disposé un bec verseur 3 de préférence orientable. A son extrémité inférieure 4, le corps 2 est pourvu d'une queue filetée 5 que l'on engage dans un trou réalisé dans l'évier ou dans le lavabo. Cette queue filetée comporte un joint d'étanchéité 6 appliqué contre l'épaulement 7 situé entre ladite queue filetée 5 et l'extrémité inférieure 4 du corps 2. Ce joint d'étanchéité 6 prend appui sur le dessus de l'évier ou du lavabo et le maintien du robinet 1 est assuré par un écrou de serrage vissé sur la queue filetée 5.

Dans l'extrémité inférieure 8 de la queue filetée 5 débouchent une arrivée d'eau chaude 9 et une arrivée d'eau froide 10 reliées à des ca-

0140807

nalisations adéquates. Le corps 2 comporte deux têtes 11, 12, chacune étant branchée sur une arrivée d'eau 9 ou 10.

Conformément à l'invention, on réalise sur l'arrivée d'eau froide 10 un piquage 13 raccordé à la machine à alimenter en eau froide, cette machine pouvant être soit une machine à laver le linge, soit une machine à laver la vaisselle, soit toute autre machine nécessitant une alimentation en eau froide. Ce piquage 13 comporte un robinet d'arrêt 14. Celui-ci présente une bille creuse 15 assurant l'ouverture et/ou la fermeture du passage de l'eau. Cette bille creuse 15 est montée sur un axe 16 pourvu d'une tête 17 faisant saillie latéralement par rapport au corps 18 du robinet d'arrêt 14. Celui-ci est actionné à distance par des moyens de commande 19 intercalés entre le corps 2 du robinet mélangeur monobloc 1 et le robinet d'arrêt 14. Ces moyens de commande 19 comportent une tringle verticale 20 traversant de part en part le corps 2. Cette tringle verticale 20 présente, à sa partie supérieure 21 débouchant derrière le bec verseur 3 du corps 2, un bouton de commande 22 permettant d'actionner la tringle verticale 20.

Sur l'extrémité inférieure 23 de la tringle verticale 20 est fixée une butée 24 pourvue d'un doigt de commande 25. Dans ce dernier est pratiqué un orifice 26 dans lequel coulisse l'extrémité 27 d'un second moyen de commande constitué par un levier 28 dont l'autre extrémité 29 est solidaire de la tête 17 de l'axe 16 de la bille 15 du robinet d'arrêt 14.

En exerçant une traction sur la tringle verticale 20, on relève la butée 24 qui entraîne l'extrémité 27 du levier 28. Celui-ci pivote autour de l'axe 16 provoquant la rotation de ce dernier et, par voie de conséquence, de la bille creuse 15. De ce fait, il y a ouverture du robinet d'arrêt 14 et la machine est alimentée en eau froide.

Inversement, en poussant la tringle verticale 20, on rabaisse la butée 24 provoquant la rotation en sens inverse de la bille creuse 15 et, par voie de conséquence, on obtient la fermeture du robinet d'arrêt 14.

Revendications

1. Robinet mélangeur monobloc (1) d'un évier et/ou d'un lavabo, composé d'un corps (2) présentant une queue filetée (5) pour sa fixation, d'une arrivée d'eau froide (10) et d'une arrivée d'eau chaude (9), de deux têtes (11, 12) pour ces arrivées d'eau (9, 10) et d'un bec verseur (3) de préférence orientable, caractérisé en ce que l'arrivée d'eau froide (10) comporte un piquage (13) raccordé à la machine à alimenter en eau froide et pourvu d'un robinet d'arrêt à bille (14) actionné à distance par des moyens de commande (19) intercalés entre le corps (2) du robinet mélangeur monobloc (1) et le robinet d'arrêt (14).

2. Robinet mélangeur monobloc selon la revendication 1, caractérisé en ce que l'un des moyens de commande (19) est une tringle verticale (20) traversant de part en part le corps (2) et présentant à son extrémité supérieure (21) un bouton de commande (22).

3. Robinet mélangeur monobloc selon la revendication 2, caractérisé en ce que la partie supérieure saillante (21) de la tringle verticale (20) est située derrière le bec verseur (3).

4. Robinet mélangeur monobloc selon la revendication 2, caractérisé en ce que la tringle verticale (20) comporte à son extrémité inférieure (23) une butée (24) pourvue d'un doigt de commande (25) présentant un orifice (26).

5. Robinet mélangeur monobloc selon la revendication 1, caractérisé en ce que le robinet d'arrêt (14) comporte un axe (16) solidaire de la bille creuse (15) et pourvu d'une tête (17) faisant saillie latéralement par rapport à son corps (18).

6. Robinet mélangeur monobloc selon la revendication 1, caractérisé en ce que l'autre moyen de commande (19) est un levier (28) dont une des extrémités (27) coulisse à travers l'orifice (26) de la butée (24) et dont l'autre extrémité est solidaire de la tête (17) de l'axe (16) du robinet d'arrêt (14).

FIG. 1

FIG. 2

0140807

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-3 022 706 (HANSA METALLWERKE) * Page 9, lignes 10-20; figures * | 1-3 | F 16 K 19/00 F 16 K 27/02 E 03 C 1/23 |
| A | DE-A-2 808 348 (HANSA METALLWERKE) * Page 3, paragraphe 3 * | 1 | |
| A | US-A-3 080 570 (WEDDENDORF) | | |
| A | FR-A-2 436 311 (FIRMA KLUDI-ARMATUREN PAUL SCHEFFER) | | |
| A | EP-A-0 071 729 (FIRMA KLUDI-ARMATUREN PAUL SCHEFFER) | | |

**DOMAINES TECHNIQUES RECHERCHES (Int. Cl.4)**

F 16 K
E 03 C

Le présent rapport de recherche a été établi pour toutes les revendications

| Lieu de la recherche | Date d'achèvement de la recherche | Examinateur |
|---|---|---|
| LA HAYE | 20-11-1984 | VAN REETH A.L.J. |